# EUROPÄISCHE PATENTSCHRIFT

(11) **EP 2 219 940 B1**
(45) Veröffentlichungstag und Bekanntmachung des Hinweises auf die Patenterteilung: **08.08.2012**
(21) Anmeldenummer: 08865328.2
(22) Anmeldetag: 20.10.2008
(51) Int. Cl.: B64C 1/06, B64D 11/00

(54) **SICHERHEITSKABINENSYSTEM, VERFAHREN ZUR HERSTELLUNG UND VERWENDUNG**
SAFETY CABIN SYSTEM, METHOD FOR MANUFACTURE AND USE
CABINE DE SECURITE, METHODE DE FABRICATION ET UTILISATION

(30) Priorität: 20.12.2007 DE 102007061423; 20.12.2007 US 8424
(43) Veröffentlichungstag der Anmeldung: 25.08.2010
(73) Patentinhaber: Airbus Operations GmbH, 21129 Hamburg (DE)
(72) Erfinder: SCHNEIDER, Uwe, 21635 Jork Königreich (DE)
(74) Vertreter: Kopf, Korbinian Paul
(86) Internationale Anmeldenummer: PCT/EP2008/064122
(87) Internationale Veröffentlichungsnummer: WO 2009/080385

(56) Entgegenhaltungen:
- EP-A- 0 279 620
- EP-A- 0 437 870
- EP-A- 1 557 355
- WO-A-2006/136804
- WO-A-2007/031321
- DE-A1-102006 048 376

## Beschreibung

Die vorliegende Anmeldung beansprucht die Priorität der US Provisional Patentanmeldung Nr. 61/008,424, eingereicht am 20. Dezember 2007 und der deutschen Patentanmeldung Nr. 10 2007 061 423.5, eingereicht am 20. Dezember 2007, auf deren Inhalte hier Bezug genommen wird.

### Gebiet der Erfindung:

Die Erfindung bezieht sich auf ein Kabinensystem für einen Flugzeugrumpf, sowie dessen Verwendung, und ein Verfahren zum Herstellen einer Kabine mittels dieses Kabinensystems mit mehreren Verkleidungsbauteilen zur Innenverkleidung und mehreren Kabinenausstattungskomponenten.

### Hintergrund der Erfindung:

Derartige Kabinensysteme sind hinlänglich bekannt. Üblicherweise werden bei bekannten Kabinensystemen die Verkleidungsbauteile bzw. jegliches Kabinenbauteil primär an der Außenstruktur eines heutzutage üblicherweise noch hauptsächlich aus Aluminium hergestellten Flugzeugs befestigt. Bei der Entwicklung moderner Flugzeugrümpfe aus Faserverbundmaterialien, wie etwa CFK (kohlefaserverstärkter Kunststoff), sind für den Passagierkomfort ebenso Innenverkleidungen notwendig, deren Befestigung mittels selbiger oder ähnlicher Technik geplant ist. An einen Rumpf aus derartigen Verbundmaterialien werden jedoch andere Anforderungen als an einen Aluminiumrumpf gestellt. Bei Beschädigungen durch Ein- oder Aufschläge verformt sich ein CFK-Rumpf nicht, sondern splittert. Es muß daher sichergestellt werden, dass gesplittertes Material nicht in die Passagierkabine des Flugzeugs eindringt. Herkömmliche Kabinenkonzepte bieten dafür keine Hilfestellung, denn sie sind konzeptionell auf leicht beherrschbare Metallrümpfe ausgelegt. Für die Integration einer gegen eindringende Splitter sicheren Innenverkleidung bzw. Kabine in einen aus CFK oder ähnlichen Materialien gefertigten Flugzeugrumpf, ist erforderlich, dass sie im Wesentlichen eine geschlossene Sicherheitszelle darstellt.

Bei Beschädigungen des Rumpfes dürfen keine Fremdkörper in die Kabine eindringen und die dort sich aufhaltenden Passagiere verletzen.

Aus EP 0 279 620 B1 ist eine in sich geschlossene Flugzeugrumpf-Innenverkleidung bekannt, die jedoch insbesondere dazu dient, die Geräuschbelastung im Innern der Passagierkabine zu reduzieren. Die vorgeschlagene Innenverkleidung besteht dabei aus mehreren miteinander verbundenen Teilen, die aus einer Wabenstruktur mit zusätzlichem Dämpfungsmaterial aufgebaut sind. Dieser "Kokonaufbau" wird durch eine Vielzahl von Paneelen realisiert, die aneinander angrenzen und jeweils an mehreren Stellen des Flugzeugrumpfes befestigt werden. Nachteilig bei diesem Aufbaus ist, dass eine Vielzahl von Anbindungselementen innerhalb des Flugzeugrumpfes angebracht werden müssen, an denen die Paneele befestigt werden. Dies ist bei einem CFK-Rumpf äußerst ungünstig, denn solche Verbindungselemente ziehen einen sehr hohen Integrationsaufwand nach sich, sind schlecht reparierbar und mindern die mechanische Güte der bevorzugt glatten Oberflächen des Rumpfs.

### Zusammenfassung der Erfindung:

Die Aufgabe der Erfindung ist daher, die vorangehend genannten Nachteile zu verringern oder gänzlich zu eliminieren. Insbesondere ist Aufgabe der Erfindung, eine Innenverkleidung bzw. eine Kabine für einen Flugzeugrumpf vorzuschlagen, die eine geschlossene Sicherheitszelle gegen den Eintritt von beschädigtem bzw. gesplittertem Rumpfmaterial darstellt und dabei besonders leicht in den Flugzeugrumpf integriert werden kann. Der leichte Einbau soll dabei auch bedeuten, dass möglichst wenige Anbindungselemente im Innern des Flugzeugrumpfes zur Befestigung der Innenverkleidung benötigt werden.

Die Aufgabe wird - wie in Anspruch 1 angegeben -- durch ein Kabinensystem für einen Flugzeugrumpf gelöst*.*

Durch ein derartiges erfindungsgemäßes Kabinensystem kann eine besonders sichere Kabine aufgebaut werden, die Eigenschaften einer Sicherheitszelle aufweist. Sämtliche verwendeten Komponenten sind miteinander kombinier- und gegenseitig verspannbar, so dass sie sich an die Kontur des Rumpfs anschmiegen und sich ohne eine Vielzahl von Anbindungselementen und Durchbrüchen selbst am Rumpf fixieren. Dies bedeutet insbesondere für aus Faserverbundmaterialien hergestellte Flugzeugrümpfe einen kontinuierlichen und vorteilhaften Faserverlauf tragender Strukturelemente, was wiederum eine Verbesserung der mechanischen Festigkeit und Güte zur Folge hat und zudem sicherstellt, dass splitterndes Material nicht durch eine sichere, auch bei beschädigtem Rumpf selbsttragende Kabinenwand in das Innere der Kabine gerät. Zudem werden Bauteile und Einbaukosten reduziert, da der Einbau aufgrund wegfallender separater Anbindungselemente rascher durchgeführt werden kann. Weiterhin ist die aus solchen erfindungsgemäßen Verkleidungsbauteilen zusammengestellte Kabine besonders wartungsfreundlich, da keine Befestigungselemente oder Werkzeuge zur Montage oder Demontage erforderlich sind. Im Idealfall wird das Befestigungsprinzip für den Passagier nicht sichtbar und kein Bauteil bedingt die Demontage anderer Bauteile.

Vorteilhafte Weiterbildungen dieser Erfindung sind den Unteransprüchen zu entnehmen.

Die Erfindung wird nachfolgend anhand der Figuren näher erläutert. In den Figuren werden gleiche Objekte durch gleiche Bezugszeichen gekennzeichnet.

### Kurze Beschreibung der Figuren:

- Fig. 1a:: eine schematische Übersicht über einen erfindungsgemäßen Kabinenaufbau;
- Fig. 1b:: eine schematische Materialdarstellung von Kabinenbauteilen;
- Fig. 2a:: eine Detaildarstellung eines Einhäng-Hatracks;
- Fig. 2b:: eine Hatrack-Halterung an den Spanten;
- Fig. 3a:: eine Detaildarstellung der unteren Hatrack-Befestigung an den Spanten und eingestecktes Seitenverkleidungsbauteil und
- Fig. 3b:: Detaildarstellung eines Versorgungskanals als Schnittstelle zum Sitzadapter und zur Seitenverkleidung.

### Detaillierte Beschreibung der Ausführungsbeispiele:

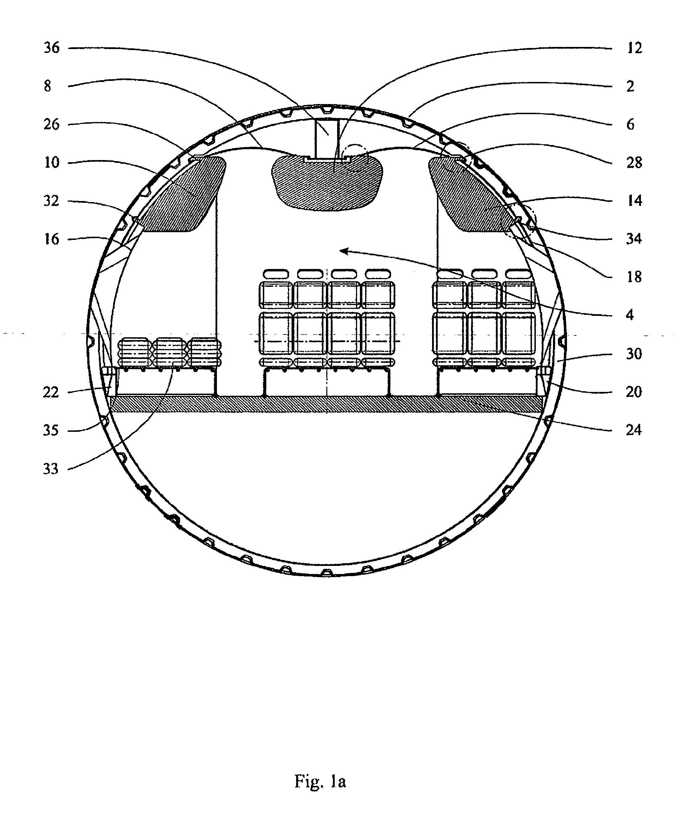

In Fig. 1a wird ein Querschnitt eines Flugzeugrumpfs 2 gezeigt, in den eine Kabine 4 integriert ist. Die Kabine 4 besteht aus Deckenverkleidungsteilen 6 und 8, Staufächern (auch "Hatrack" oder "Overhead Bin" genannt) 10, 12 und 14, Seitenverkleidungsteilen 16 und 18, Versorgungskanälen 20 und 22 sowie einem Kabinenfußboden 24. Diese Elemente 4 bis 24 definieren in ihrer Gesamtheit zumindest einen Abschnitt einer Passagierkabine in Form einer geschlossenen Sicherheitszelle.

Bevorzugt bestehen die vorgenannten Bauteile aus einem schlagzähen Material, wie etwa glasfaserverstärktem Kunststoff (GFK) oder einem ähnlichen Laminat mit Aramidfasern. Die Festigkeit des Materials kann durch zusätzliche Kevlar-Zwischenlagen gesteigert werden. Das Material ist insbesondere dafür geeignet, Einschläge von Splittern des Rumpfmaterials aufzuhalten.

Die beiden seitlichen Staufächer 10 und 14 sind in dieser Darstellung mit je einem oberen Ende 26 und 28 in Spanten 30 eingehängt und mit je einem unteren Ende 32 und 34 in die Spanten 30 lösbar verrastet. Dadurch sind die Staufächer 10 und 14 mechanisch fest mit der Struktur des Flugzeugrumpfs 2 verbunden. An die oberen Enden der Staufächer 10 und 14 schließen sich die Deckenverkleidungsteile 8 und 6 an, die mit ihrer in dieser Darstellung äußeren Kante in das Staufach 10 bzw. 14 eingesteckt sind und mit ihrer jeweils anderen Kante, die zum Inneren der Kabine zeigt, in das obere Staufach 12 gesteckt.

Das obere Staufach 12 ist in einen Deckenträger 36 ähnlich wie eine Seilbahn eingehängt. Der Deckenträger 36 wiederum ist an den Spanten 30 an der Oberseite der Kabine 4 befestigt und ragt im Wesentlichen senkrecht von der Rumpfoberfläche in die Kabine 4 hinein.

An die unteren Enden der Staufächer 10 und 14 schließen sich jeweils die Seitenverkleidungsteile 16 und 18 an. Diese Seitenverkleidungsteile 16 und 18 sind mit ihren oberen Kanten in die Staufächer 10 und 14 eingesteckt, mit ihren unteren Kanten in bzw. an den Versorgungskanälen 20 und 22 gehaltert. Die Versorgungskanäle 20 und 22 sind fest mit den Spanten 30 verbunden und stellen Kanäle für alle Arten von verschiedenen Leitungssystemen - wie etwa Wasser, Luft, Elektrizität und dergleichen - zur Verfügung. Die Versorgungskanäle 20 und 22 bilden an ihrem jeweiligen unteren Ende den Abschluss der Kabinenseitenverkleidung und grenzen an den Fußboden 24 an. Sitze 33 können innerhalb der Passagierkabine 4 völlig variabel mittels modulartiger Aufteilung beliebig und unabhängig von anderen Kabinenausstattungskomponenten platziert werden, wobei seitliche Sitze 33 über Sitzadapter 35 an den Versorgungskanälen 20 und 22 befestigt werden können. Sitzelektronikgeräte können durch Leitungen mit Daten und Elektrizität versorgt werden, die über die Versorgungskanäle 20 und 22 bereitgestellt werden. Ferner werden alle Strukturkomponenten des Flugzeugrumpfs 2 über die Versorgungskanäle 20 und 22 miteinander verbindbar, so dass die Passagiersitzschienen für diesen Zweck nicht mehr notwendig sind.

Durch diesen Aufbau ist es möglich, eine Passagierkabine in Form einer geschlossenen Sicherheitszelle in einem Flugzeugrumpf 2 zur Verfugung zu stellen, ohne eine Vielzahl von Befestigungs- bzw. Anbindungselementen am Flugzeugrumpf anzuordnen. Die sonst übliche Halterung der Verkleidungsbauteile 6, 8, 16 und 18 in separaten Haltern an den Spanten 30 entfallen, da beim erfindungsgemäßen Kabinensystem sämtliche Verkleidungsbauteile 6, 8, 16 und 18 nur gesteckt werden.

Der Einbau der Verkleidungsbauteile 6, 8, 16 und 18 erfolgt bei eingehängten Staufächern 10 und 14, die mit ihren unteren Enden 32 und 34 noch nicht in den Spanten 30 verrastet sind. Die unteren Enden 32 und 34 der eingehängten Staufächer sind aufgrund der Schwerkraft bei eingehängten Staufächern deutlich von den Spanten 30 beabstandet. Dadurch ist es einfach, die Seitenverkleidungsbauteile 16 und 18 in die jeweiligen Versorgungskanäle 20 und 22 sowie an die unteren Enden der Staufächer 10 und 14 zu stecken. Durch Verrasten der Staufächer 10 und 14 verringert sich der lichte Abstand zwischen den unteren Enden 32 und 34 der Staufächer 10 und 14 und den jeweils darunter liegenden Versorgungskanälen 20 und 22, so dass nach Verrasten der Staufächer 10 und 14 die Seitenverkleidungsbauteile 16 und 18 radial gespannt werden und sich dadurch gegen die Spante 30 drücken, so dass eine Fixierung der Verkleidungsbauteile 16 und 18 an dem Flugzeugrumpf 2 erfolgt.

Zum Bereitstellen einer größtmöglichen Geräusch- und Wärmedämmung können die Verkleidungsbauteile und die Kabinenausstattungskomponenten, d.h. in diesem beispielhaften Falle die Staufächer 10, 12 und 14, mit Dämmmaterialien versehen werden, die auf den zum Rumpf 2 gerichteten Oberflächen angebracht werden.

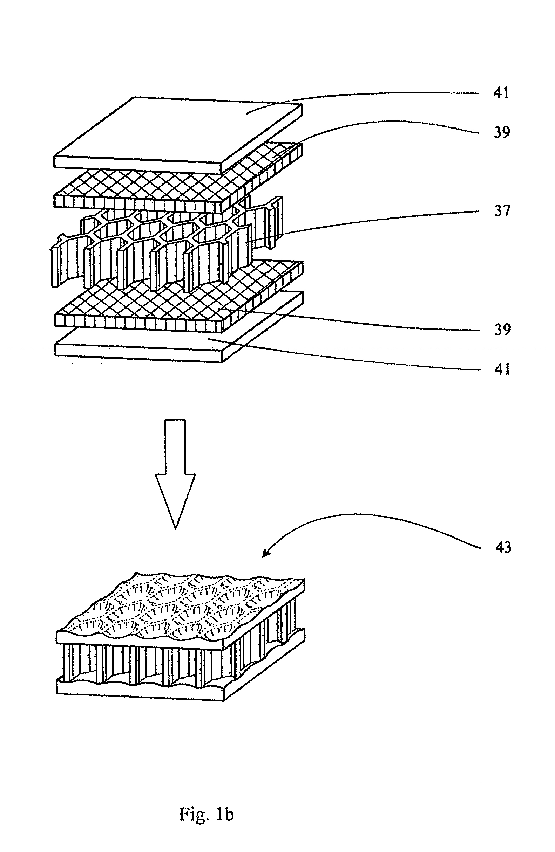

Ein vorteilhafter Materialaufbau der Verkleidungsbauteile 6, 8, 16 und 18 sowie der Staufächer 10, 12 und 14 könnte - wie in Fig. 1b dargestellt- beispielsweise einen Wabenkern 37 enthalten, der aus Aluminiumblech, geschäumtem Aluminium oder Duroplast hergestellt werden kann. An den Wabenkern 37 schließen sich bevorzugt beidseitig Klebeschichten 39 an, die auf ihrer jeweils dem Wabenkern 37 entgegengesetzten Seite einen Abschluss aus einem ebenen thermoplastischen Laminat 41 aufweisen. Ein auf diese Weise zusammengesetztes Material kann durch Behandlung in einem Autoklaven derart verändert werden, dass sich die Thermoplastschichten 41 und der Wabenkern 37 so miteinander verbinden, dass die Thermoplastschichten 41 gleichmäßige Einbuchtungen 43 in angenähert sechseckiger Form bilden, die in die einzelnen Waben des Wabenkerns 37 hineinragen. Dadurch entsteht ein hochfestes tragfähiges und leichtes aterial für die vorgestellten Kabinenbauteile.

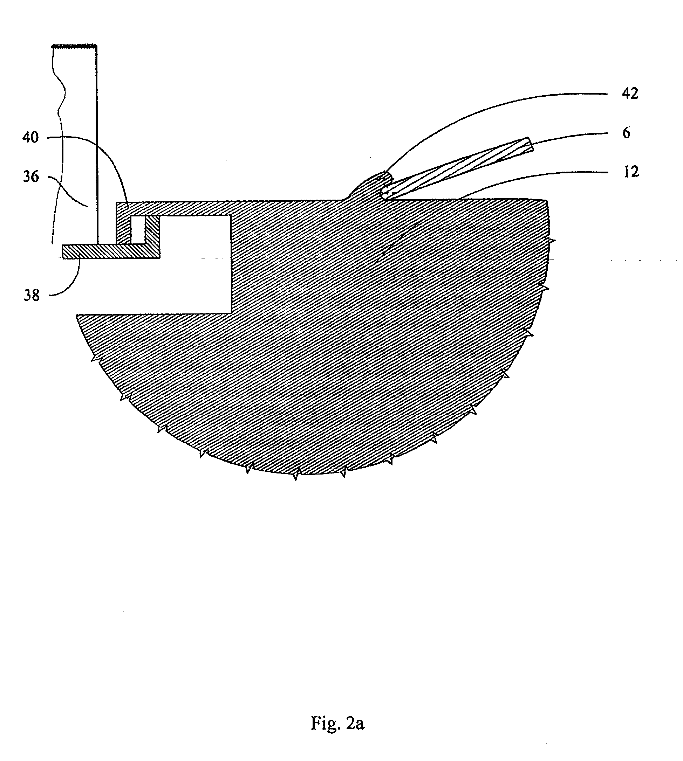

In Fig. 2a wird exemplarisch eine Möglichkeit des Einhängens des mittleren Staufachs 12 in einen Deckenträger 36 gezeigt. Dieser Deckenträger 36 weist auf seiner zur Kabine 4 gerichteten Seite beispielhaft ein U-Profil 38 auf, dessen Öffnung zur Kabinendecke zeigt. In dieses U-Profil 38 kann ein korrespondierendes und nach unten gerichtetes Profilstück 40 eingehängt werden, das am Staufach 12 befestigt ist. Dadurch hängt das Staufach 12 sicher an dem Deckenträger 36 und bildet aus diesem Grund ein geeignetes Gegenlager für die Deckenverkleidungsbauteile 6 und 8. Exemplarisch ist in Fig. 2a nur der rechte Teil des Staufachs 12 dargestellt, an dem sich ein Kragen 42 befindet, in den das rechte Deckenverkleidungsteil 6 mit seiner zum Deckenträger 36 gewandten Kante eingesteckt werden kann.

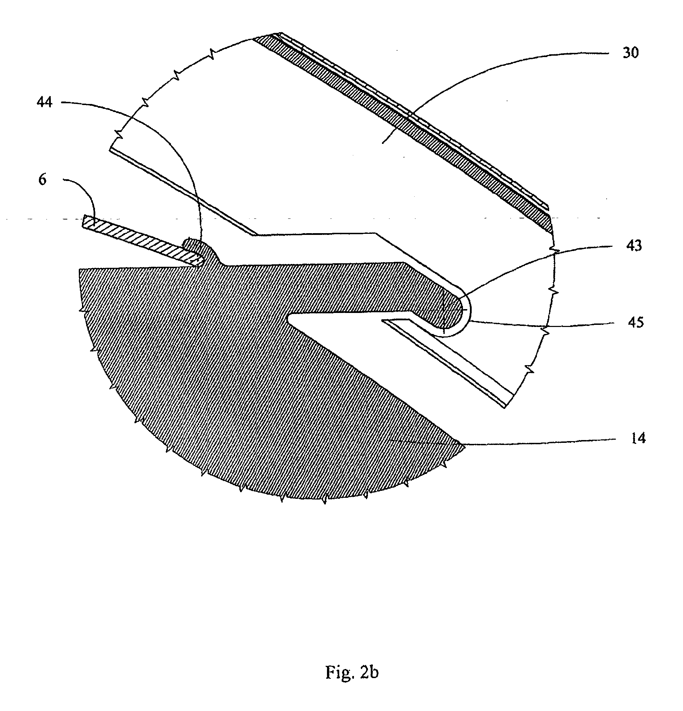

Die korrespondierende gegenüberliegende Kante der Deckenverkleidung 6 wird in einen entsprechenden Kragen 44 des Staufachs 14 eingesteckt, wie in Fig. 2b dargestellt. Bei der exemplarischen Darstellung aus Fig. 2b wird deutlich, dass der Kragen 44 weiter vom Kragen 42 beabstandet sein wird, wenn das Staufach 14 über einen Vorsprung 43 lediglich in eine Ausnehmung 45 des Spants 30 eingehängt ist, als bei verrastetem unteren Ende 34. Demzufolge kann ein Deckenverkleidungsbauteil 6 bei lediglich eingehängtem Staufach 14 vorzugsweise leicht zwischen die Kragen 42 und 44 geklemmt werden und wird beim Verrasten des Staufachs mit dessen unterem Ende 34 in den Spant 30 derart gespannt, dass es sich zur Rumpfdecke hin ausbeult und die definierte Deckenform der Kabine 4 einnimmt.

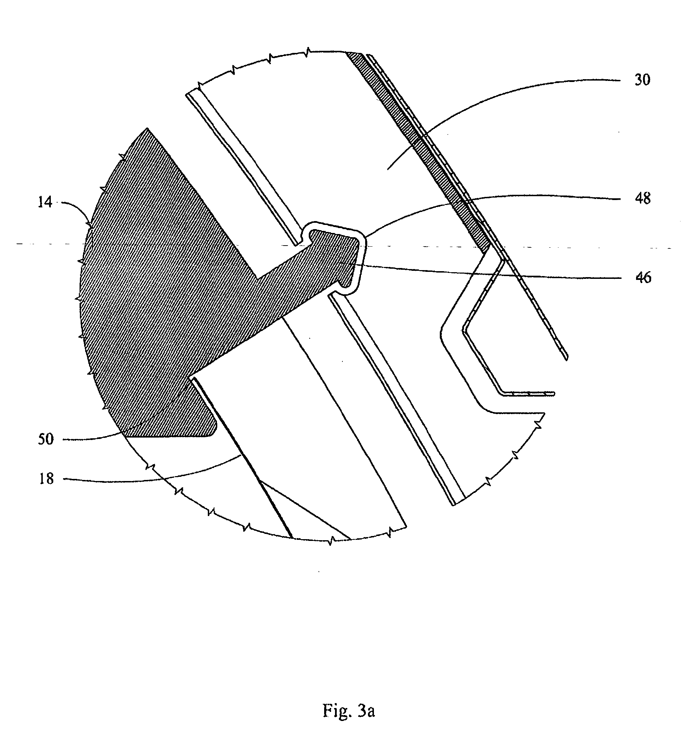

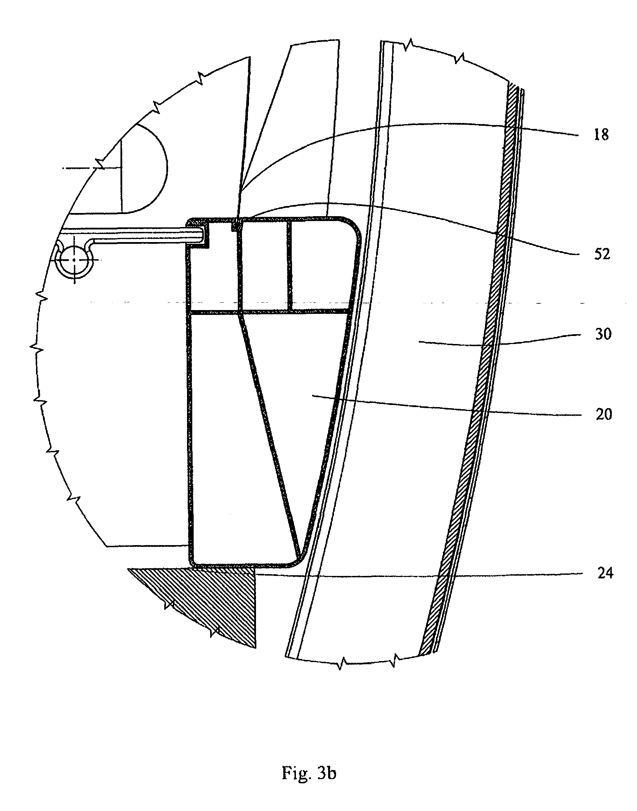

In Fig. 3a wird eine unteres Ende 34 des Staufachs 14 gezeigt, dessen Kante in dieser Darstellung exemplarisch eine im Querschnitt pfeilförmige Spitze 46 bzw. ein ebensolches Profil aufweist, das mit einer entsprechend geformten Ausnehmung 48 im Spant 30 korrespondiert. Am unteren Ende 34 des Staufachs 14 befindet sich außerdem ein Absatz 50, in den sich das rechte Seitenverkleidungsbauteil 18 klemmt.

Die diesem Ende 34 gegenüberliegende Kante des Seitenverkleidungsbauteils 18 klemmt wiederum in einer Ausnehmung 52 des Versorgungskanals 20, der sich auf der rechten Seite der Kabine 4 am Fußboden 24 befindet.

Eine erfindungsgemäße Kabine 4 ist nicht beschränkt auf die dargestellten Einbauten. Vielmehr kann eine erfindungsgemäße Kabine 4 mit allen denkbaren Kabinenausstattungskomponenten aufgebaut werden, die in einem modernen Flugzeug benötigt werden. Diese beinhalten neben den normalen Verkleidungs- bzw. Staufach-Einbauten beispielsweise auch Toiletten und Galleys. Die Einbauten können in Zusammenwirkung mit den Verkleidungsbauteilen in Umfangsrichtung bzw. radial modulartig aufgebaut werden und beliebig miteinander kombiniert werden. Wesentlich ist dabei, dass sich eine radial geschlossene Oberfläche einstellt, die eine als Sicherheitszelle ausgeführte Kabine 4 definiert. Weiterhin kann es erforderlich und sinnvoll sein, lediglich Verkleidungsbauteile zum Definieren einer geschlossenen Kabine 4 zu verwenden. Die Verkleidungsbauteile sollten aus diesem Grunde ähnlich wie die exemplarisch dargestellten Staufächer 10 und 14 Einrichtungen in Form von Kragen 42 und 44 oder anderen Formschlusselementen aufweisen. Größere Toleranzen der verwendeten Verkleidungsbauteile können durch entsprechend großzügig ausgelegte Formschlusselemente ausgeglichen werden.

Werden einzelne Verkleidungsbauteile und/oder Kabinenausstattungskomponenten - in Längsrichtung aneinander gereiht, ist es sinnvoll, dass die durch den Flugzeugrumpf 2 durchzuführenden Leitungen in die Kabinenkomponenten integriert werden. Dies führt dazu, dass insbesondere der aus einen Faserverbundwerkstoff hergestellte Flugzeugrumpf 2 von dieser Aufgabe befreit wird und dadurch eine Verbesserung der mechanischen Festigkeit und Güte erfährt. In diesem Sinne bietet es sich an, besonders den Deckenträger 36 und die Versorgungskanäle 20 und 22 zum Durchführen im Wesentlichen aller Leitungen zu verwenden. Aneinandergereihte Kabinenkomponenten oder Kabinenmodule, die aus erfindungsgemäßen Verkleidungsbauteilen und Kabinenausstattungskomponenten zusammengestellt werden, sind dabei bevorzugt über standardisierte oder gleichartige Schnittstellen für sämtliche vorliegenden Leitungsarten miteinander zu verbinden und gegeneinander durch beidseitig geschlossene und von einer Seite montierbare Dichtungen abzudichten.

Schließlich könnte, ergänzend oder alternativ zu einer thermischen oder akustischen Isolation zwischen dem Rumpf 2 und der zum Rumpf 2 gerichteten Oberfläche aller Einbauten ein weicher Füllstoff bzw. eine Klebemasse, welche eventuell elektrisch leitend ist, als Blitzschutz oder Potentialrückführung verwendet werden. Zusätzlich ist ein Auskleiden des Frachtraums mittels erfindungsgemäßen Einbauten, wie etwa Seitenverkleidungs- und anderen Verkleidungsbauteilen denkbar und sinnvoll.

Mit dem erfindungsgemäßen Kabinensystem kann eine als geschlossene Sicherheitszelle ausgeführte Kabine bereitgestellt werden, die einen sicheren Betrieb, eine hohe Modularität, eine hohe Wartungsfreundlichkeit, eine hohe Sicherheit und eine hohe Variabilität ermöglicht und eine durch die Modularität bedingte gute Zukunftsfähigkeit aufweist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Kabinensystem für einen Flugzeugrumpf (2), mit
- mehreren Verkleidungsbauteilen (6, 8, 16, 18) zur Innenverkleidung und
- mehreren im Flugzeug zu fixierenden Kabinenausstattungskomponenten,
wobei die Kabinenausstattungskomponenten zum Haltern von äußeren Kanten der Verkleidungsbauteile (6, 8, 16, 18) eingerichtet sind, so dass die Verkleidungsbauteile so unter Spannung zwischen den Kabinenausstattungskomponenten in den Flugzeugrumpf (2) gehaltert werden, dass eine in Umfangsrichtung unter Spannung stehende und sich am Flugzeugrumpf (2) fixierende Kabine (4) definiert wird, wobei mindestens eine Kabinenausstattungskomponente als ein über Passagiersitzen angeordnetes Staufach (10, 12, 14) ausgeführt ist.

2. Kabinensystem nach Anspruch 1, wobei eine oder mehrere Kabinenausstattungskomponenten als Versorgungskanäle (20, 22) zur Leitungsdurchführung ausgeführt sind.

3. Kabinensystem nach einem der vorhergehenden Ansprüche, bei dem ein oder mehrere Staufächer (10, 12, 14) in je einen Deckenträger (36) eingehängt werden, die in oberen Bereich der Kabine (4) angeordnet sind.

4. Kabinensystem nach einem der vorhergehenden Ansprüche, mit Staufächern (10, 12, 14), die dazu ausgebildet sind, in ersten Ausnehmungen (43) von Spanten (30) eingehängt und in zweiten Ausnehmungen (48) mittels korrespondierender Kanten (46) verrastet werden zu können.

5. Kabinensystem nach einem der vorhergehenden Ansprüche, bei dem die Verkleidungsbauteile (6, 8, 16, 18) und/oder die Kabinenausstattungskomponenten aus einem schlagzähen Werkstoff ausgeführt sind.

6. Kabinensystem nach Anspruch 5, bei dem der schlagzähe Werkstoff als Glasfaser- und/oder Aramidfaserlaminat ausgeführt ist und wahlweise zusätzliche Laminatlagen aus Kevlar aufweist.

7. Kabinensystem nach einem der vorhergehenden Ansprüche, bei dem die Verkleidungsbauteile und/oder die Kabinenausstattungskomponenten aus einem Material besteht, das einen Wabenkern (37) und auf diesen beidseitig aufgebrachte Lagen thermoplastischen Materials (41) aufweist, wobei das thermoplastische Material zumindest einseitig in die Waben ragende Einbuchtungen (43) aufweist.

8. Kabinensystem nach einem der vorhergehenden Ansprüche, bei dem die Staufächer (10,12,14) Einrichtungen (42, 44) zum Einstecken von Verkleidungsbauteilen (6, 8, 16, 18) aufweisen.

9. Kabinensystem nach einem der vorhergehenden Ansprüche, bei dem die Versorgungskanäle (20, 22) Einrichtungen zum Einstecken von Verkleidungsbauteilen (6, 8, 16, 18) aufweisen.

10. Kabinensystem nach Anspruch 8 oder 9, bei dem die Verkleidungsbauteile (6, 8, 16, 18) zum Einstecken in dafür geeignete Einrichtungen von Versorgungskanälen (20, 22) und/oder Staufächern (10, 12, 14) ausgebildet sind.

11. Kabinensystem nach einem der vorhergehenden Ansprüche, bei dem die Deckenträger (36) zum Durchführen von Leitungen verwendet werden können.

12. Verkleidungsbauteil (6, 8, 16, 18) zur Verwendung in einem Kabinensystem nach einem der Ansprüche 1-11.

13. Kabinenausstattungskomponente zur Verwendung in einem Kabinensystem nach einem der Ansprüche 1-11.

14. Verfahren zum Herstellen einer Kabine (4) in einem Flugzeugrumpf (2) mittels des Kabinensystems nach einem der Ansprüche 1-11.

15. Verwendung des Kabinensystems nach Ansprüchen 1-11 in einem Flugzeugrumpf (2).

## Claims

1. A cabin system for an aircraft fuselage (2), comprising
- a plurality of lining components (6, 8, 16, 18) for lining the interior, and
- a plurality of cabin equipment components to be fixed in the aircraft, wherein the cabin equipment components are designed to hold outer edges of the lining components (6, 8, 16, 18), such that the lining components are mounted under tension to the aircraft fuselage (2) between the cabin equipment components in such a manner that a cabin (4) that is under tension in the circumferential direction and that is fixed to the aircraft fuselage (2) is defined, wherein at least one cabin equipment component is designed as an overhead bin (10, 12, 14) arranged above passenger seats.

2. A cabin system according to claim 1, wherein one or more cabin equipment components are designed as supply ducts (20, 22) for lines to pass through.

3. A cabin system according to either one of the preceding claims, in which one or more overhead bins (10, 12, 14) are each hooked into a ceiling beam (36) arranged in the upper region of the cabin (4).

4. A cabin system according to any one of the preceding claims, comprising overhead bins (10, 12, 14) that are designed to be able to be hooked into first recesses (43) of frame elements (30) and to be locked into place in second recesses (48) by means of corresponding edges (46).

5. A cabin system according to any one of the preceding claims, in which the lining components (6, 8, 16, 18) and/or the cabin equipment components are made from an impact-resistant material.

6. A cabin system according to claim 5, in which the impact-resistant material takes the form of a glass fibre and/or aramid fibre laminate, and optionally comprises additional laminate layers comprising Kevlar.

7. A cabin system according to any one of the preceding claims, in which the lining components and/or the cabin equipment components consist of a material that has a honeycomb core (37) and layers of thermoplastic material (41) applied on both sides thereof, wherein the thermoplastic material comprises indentations (43) that project into the honeycombs at least on one side.

8. A cabin system according to any one of the preceding claims, in which the overhead bins (10, 12, 14) comprise devices (42, 44) for inserting lining components (6, 8, 16, 18).

9. A cabin system according to any one of the preceding claims, in which the supply ducts (20, 22) comprise devices for inserting lining components (6, 8, 16, 18).

10. A cabin system according to claim 8 or claim 9, in which the lining components (6, 8, 16, 18) are designed to be inserted in suitable devices of supply ducts (20, 22) and/or overhead bins (10, 12, 14).

11. A cabin system according to any one of the preceding claims, in which the ceiling beams (36) can be used for the passage of lines.

12. A lining component (6, 8, 16, 18) for use in a cabin system according to any one of claims 1-11.

13. A cabin equipment component for use in a cabin system according to any one of claims 1-11.

14. A method for producing a cabin (4) in an aircraft fuselage (2) by means of the cabin system according to any one of claims 1-11.

15. Use of the cabin system according to claims 1-11 in an aircraft fuselage (2).

## Revendications

1. Système de cabine pour un fuselage d'avion (2), doté de
- plusieurs éléments d'habillage (6, 8, 16, 18) destinés à l'habillage interne et
- plusieurs composants d'équipement de cabine à fixer dans l'avion,
les composants d'équipement de cabine étant disposés pour la fixation de bords extérieurs de composants d'équipement de cabine (6, 8, 16, 18), de telle sorte que les éléments d'habillage sont fixés sous une telle tension entre les composants d'équipement de cabine dans le fuselage d'avion (2) qu'une cabine (4) sous tension dans le sens circonférentiel et se fixant au fuselage d'avion (2) est définie, au moins un composant d'équipement de cabine étant réalisé sous la forme d'un compartiment de rangement (10, 12, 14) disposé au-dessus des sièges passagers.

2. Système de cabine selon la revendication 1, un ou plusieurs composants d'équipement de cabine étant réalisés sous la forme de canaux d'alimentation (20, 22) destinés à passer les câbles.

3. Système de cabine selon l'une des revendications précédentes, dans lequel un ou plusieurs compartiments de rangement (10, 12, 14) sont accrochés individuellement dans un support de couvercle (36), qui sont disposés dans la zone supérieure de la cabine (4).

4. Système de cabine selon l'une des revendications précédentes, pourvu de compartiments de rangement (10, 12, 14), qui sont formés de telle sorte qu'ils peuvent être accrochés dans des premiers évidements (43) de couples (30) et peuvent être encliquetés dans des seconds évidements (48) au moyen d'arêtes (46) correspondantes.

5. Système de cabine selon l'une des revendications précédentes, dans lequel les éléments d'habillage (6, 8, 16, 18) et/ou les composants d'équipement de cabine sont constitués d'un matériau résistant aux chocs.

6. Système de cabine selon la revendication 5, dans lequel le matériau résistant aux chocs est réalisé sous forme de stratifié aux fibres d'Aramide ou de fibres de verre et au choix des couches de stratifié supplémentaires en Kevlar.

7. Système de cabine selon l'une des revendications précédentes, dans lequel les éléments d'habillage et/ou les composants d'équipement de cabine sont constitués d'un matériau, qui présente un noyau d'alvéoles (37) et présente sur ce dernier des couches de matériau thermoplastique (41) appliquées sur les deux côtés, le matériau thermoplastique présentant des renflements (43) pénétrant au moins sur un côté dans les alvéoles.

8. Système de cabine selon l'une des revendications précédentes, dans lequel les compartiments de rangement (10, 12, 14) présentent des dispositifs (42, 44) destinés à l'enfichage d'éléments d'habillage (6, 8, 16, 18).

9. Système de cabine selon l'une des revendications précédentes, dans lequel les canaux d'alimentation (20, 22) présentent des dispositifs destinés à l'enfichage d'éléments d'habillage (6, 8, 16, 18).

10. Système de cabine selon la revendication 8 ou 9, dans lequel les éléments d'habillage (6, 8, 16, 18) sont formés pour être enfichés dans des dispositifs de canaux d'alimentation (10, 12, 14) destinés à cet effet.

11. Système de cabine selon l'une des revendications précédentes, dans lequel les supports de couvercle (36) sont utilisés pour faire passer les câbles.

12. Elément d'habillage (6, 8, 16, 18) pour une utilisation dans un système de cabine selon l'une des revendications 1 à 11.

13. Composants d'équipement de cabine pour une utilisation dans un système de cabine selon l'une des revendications 1 à 11.

14. Méthode de fabrication d'une cabine (4) dans un fuselage d'avion (2) au moyen du système de cabine selon l'une des revendications 1 à 11.

15. Utilisation du système de cabine selon les revendications 1 à 11 dans un fuselage d'avion (2).
